(19) Europäisches Patentamt
European Patent Office
Office européen des brevets

(11) **EP 4 768 714 A1**

(12) **EUROPEAN PATENT APPLICATION**

(43) Date of publication:
**01.07.2026 Bulletin 2026/27**

(21) Application number: **25227695.1**

(22) Date of filing: **30.12.2025**

(51) International Patent Classification (IPC):
***F03D 1/06*** *(2006.01)* ***F03D 80/80*** *(2016.01)*

(52) Cooperative Patent Classification (CPC):
**F03D 1/0677; F03D 80/80;** F05B 2240/302

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.12.2024 PT 2024119961**

(71) Applicants:
• **Oprimee - Innovation Design Engineering Solutions, Lda**
**3405-155 Oliveira do Hospital (PT)**
• **Associação Cecolab - Collaborative Laboratory Towards Circular Economy**
**3405-155 Oliveira do Hospital (PT)**

• **Associação BLC3 - Campus de Tecnologia e Inovação**
**3405-155 Oliveira do Hospital (PT)**

(72) Inventors:
• **DOS SANTOS ALMEIDA NUNES, JOÃO MIGUEL**
**3405-155 OLIVEIRA DO HOSPITAL (PT)**
• **NUNES PEREIRA CID TELES, JOÃO MANUEL**
**3405-155 OLIVEIRA DO HOSPITAL (PT)**
• **FRANCISCO DE FIGUEIREDO, FILIPA DANIELA**
**3405-155 OLIVEIRA DO HOSPITAL (PT)**

(74) Representative: **Patentree**
**Edificio Net**
**Rua de Salazares, 842**
**4149-002 Porto (PT)**

(54) **WIND TURBINE BLADE WITH CUTTING CONTOUR FOR MODULAR BUILDING ASSEMBLY AND METHODS THEREOF**

(57) The disclosure relates a wind blade (1) segmented by a cutting contour (2, 9, 12) into an inner segment (3) and an outer segment (4). The cutting contour includes straight and circular portions enabling modular assembly. The outer segment comprises an opening (7) configured to receive the inner segment of another wind blade. A building assembly is formed using three wind blades, where the outer segments align and abut each other in a horizontal plane, optionally creating a hollow space for accommodating utilities. The disclosure also provides a method for manufacturing wind blades with specific cutting contours and assembling them into modular structures for versatile applications. This design facilitates cost-effective construction of warehouses, residential, commercial, and industrial facilities, while reusing wind blade components for sustainable architecture.

**Fig. 2d**

## Description

### TECHNICAL FIELD

The present disclosure relates to the reuse of wind blades in modular construction. Specifically, it pertains to segmenting wind blades using a cutting contour into inner and outer segments, enabling their reuse as structural components for building assemblies seeking a reduced material removal. The disclosure further addresses methods for manufacturing and assembling such segmented wind blades into versatile and sustainable building structures.

### BACKGROUND

In recent decades, wind energy gained traction worldwide. The governments of many countries around the world started implementing clean energy policies due to the growing environmental concerns. Traditional means of producing energy have been often very harmful to the environment. This former including , for example, coal power stations, biomass thermal stations or the massive use of natural gas and oilbased fuels, whose use and exploitation generates the destruction of the exploitation sites and incredible amounts of GHG's (Green House Gases).

Taking this into account, investments in renewable energies begun, which led to the construction of countless wind farms filled of wind turbines. However, wind turbines usually have a lifespan of around twenty-five years and, given the fact that the first wind farms became operational in the end of the 20th century and the beginning of the 21st century, this means a lot of wind turbines are about to be dismantled in the coming years. Another environmental concern related to what to do with the dismantled portions of those wind turbines is intensifying.

Wind towers can be made of materials such as wood, concrete or steel and the processes for their reuse or recycling are totally established. Otherwise, wind blades are mainly made of resins combined with fiberglass, carbon glass or aramid and for these materials, reuse and recycle processes are difficult and of great energy waste.

Given this fact, the majority of end-of-life wind blades end up in landfills without any further use or recycling process. To overcome said energy wasting recycling processes and landfills, several initiatives have started to reuse entire wind blades or their sections for architectural appointments or civil engineering needs, such as playgrounds, bicycle park covers, or even small bridges.

These facts are disclosed in order to illustrate the technical problem addressed by the present disclosure.

### GENERAL DESCRIPTION

The present application describes a contour to cut wind turbines and to set them in a set of three, wherein any of the cutting contours is characterized to have such a design that allows to reduce waste during cutting process close to minimum.

In an embodiment, the cutting contour is geometrically characterized by a circular contour with a certain radius, centred in a given point and by two straight contours that develop from the centre point until the border of the wind blade, in such an angle that allows the setting of three resulting wind blade segments contained in a certain plan.

The segmented wind blade and modular building assembly of the present disclosure provide several technical and practical advantages. Namely, the provision of cutting contours comprising straight and circular portions enables precise segmentation of wind blades into complementary inner and outer segments, facilitating repeatable and modular assembly of structural elements. The configuration of the outer segment with an opening adapted to receive an inner segment of another wind blade allows interlocking engagement between blade segments, improving structural stability and load distribution in assembled building structures. the arrangement of multiple wind blades with their outer segments aligned and abutting in a horizontal plane permits the formation of modular building assemblies, while optionally defining a hollow internal space suitable for accommodating utility installations such as electrical conduits, piping, or insulation.

With this practical approach, there is a reduction in stress and fatigue with this type of application, which is important for the lifespan of wind turbine blades, whether new or used, where it is possible to use used blades in this type of solution, even as an end-of-life solution in wind energy production, through a vision of moving from dynamic mechanics (high torsional stresses) to a preferably static mechanics (increases the lifespan and reuse in the case of used blades and longer lifespan in the case of new blades), where in wind farms the lifespan is 20 to 25 years (with maintenance) and here in this situation it can be over 50 years.

In an embodiment, the cutting contour is geometrically characterized by a circular contour with a certain radius, centred in a given point and by four straight contours, two of them developing from the centre point until the border of the wind blade, in such an angle that allows the setting of three resulting wind blade segments contained in a certain plan and another two of them being parallel to the perpendicular to the wind blade longitudinal axis that passes in the centre point.

In an embodiment, the cutting contour is geometrically characterized by two straight contours that develop from the centre point until the border of the wind blade, in such an angle that allows the setting of three resulting wind blade segments contained in a certain plan, and by a contour with any geometric development that develops between the inner extremities of the foresaid straight contours.

In an embodiment the setting of three outer wind blade segments is characterized to form a hollow space in a central position of the union of the three said outer wind blade segments that is a circle.

In an embodiment the setting of three outer wind blade segments is characterized to form a hollow space in a central position of the union of the three said outer wind blade segments that is composed by a circle and a triangle that have the same geometric centre.

In one embodiment the setting of three outer wind blade segments is characterized to form a hollow space in a central position of the union of the three said outer wind blade segments that is composed by a circle and a geometric shape defined by the intersection of circular and linear contour portions.

Such as previously described, according to the background, end-of-life wind blades, when dismantled, usually end up in landfills or are recycled in high energy wasting recycling processes. Due to this, there is a general interest of the industry and the scientific community in ways of reusing these wind blades.

Existing initiatives of reuse for the said wind blades are limited, given the fact that they involve a large transformation of the starting product, generating too much cuts and too much waste, those initiatives frequently using only small sections and requiring large adjustments to meet the intended purposes.

Seeking zero waste, the present disclosure discloses ways of reusing the totality or near totality of wind blades to integrate them into building structures or structures for any other purpose. The present disclosure reveals clever ways of setting together a set of three wind blades by the means of cutting contours aligned with the reduced material removal, in order to reduce the waste generated by the cuts at the bare minimum. To achieve that, geometric patterns are disclosed hereby.

Also considered by the present disclosure is the possibility of housing something in the encounter of the three mentioned wind blades, such as, in case of buildings, ventilation pipes, water pipes or even small elevators, meaning this that the technology has to consider cutting contours that ensure the needed room to allow this kind of installations and devices to pass through the union of the three blades.

The present application therefore describes possible contours for the cutting of end-of-life wind blades, allowing them to take portion into newer structures, keeping functionality and resulting in the bare minimum of waste generated during the cutting and processing. It also describes a possible cutting contour to fit two wind blade segments that result from the cut together. Cutting contours shown herein are thought to be applicable to a wide range of wind blade models.

The disclosed technology shifts the focus of the mechanics traditionally applied to the dynamics of a wind turbine's original structure, redirecting it toward statics. This is achieved by utilizing the segmented wind blade portions, resulting from the cutting process, as components of a static structure, such as in building construction.

An aspect of the present disclosure relates to a wind blade (1) comprising a cutting contour (2, 9, 12) segmenting the wind blade into at least, an inner segment (3); and an outer segment (4).

An aspect of the present disclosure relates to a wind turbine blade (1) comprising a cutting contour (2, 9, 12) configured to segment the wind turbine blade into an inner segment (3) and an outer segment (4) wherein the cutting contour (2, 9, 12) comprises: at least two straight contour portions extending from a common centre point (P) towards a border of the blade at a defined angular separation ($\alpha$), and a curved contour portion connecting the straight contour portions, the curved contour portion being tangential to the straight contour portions, such that three outer blade segments obtained from three identical blades are configured to about one another in a common plane at said cutting contours.

In an embodiment the cutting contour comprises two straight portions that develop with a certain length (L; L1, L2; L5, L6) along a direction from a centre point of the contour (P) up to a border of the wind blade.

In a further embodiment the cutting contour comprises a circular portion with a radius (R) centred in the centre point (P).

In a further embodiment the cutting contour comprises two further straight contours with a certain length (L3, L4), wherein said further two straight contours are parallel to a perpendicular to a wind blade longitudinal axis.

In an embodiment the outer segment of the wind blade (4) comprises an opening (7) on an opposite side to the cutting counter, in particular, wherein the opening is larger than the section of the inner wind blade segment for fitting the inner segment of the wind blade.

Another aspect of the present disclosure relates to a building assembly for forming a building structure comprising three wind blades.

In an embodiment each outer segment of the three wind blades fits into the respective inner segment through the opening (7), and the outer segments of the three blades are placed and fixed in a same horizontal plane and abut each other through each cutting contour, in particular wherein each outer blade segment has a through-hole (10) for connection to a base (15).

In a further embodiment the outer segments of the three wind blades form a circular hollow space in a central position.

In a further embodiment the outer segments of the three wind blades form a hollow space with a shape of a circle and a triangle that have the same geometric centre.

In a further embodiment the hollow space is configured to accommodate at least one of pipes, cables, ducts, or sunlight for use in the building structure.

A further aspect of the present disclosure relates to a method for manufacturing a wind blade (1) comprising a step of applying a cutting contour (2, 9, 12) for segmenting the wind blade into at least an inner segment (3); and an outer segment (4).

In a further embodiment the cutting contour comprises two straight portions that develop with a certain length (L) along a direction from a centre point the contour up to a border of the wind blade.

In a further embodiment the cutting contour comprises a circular portion with a radius (R) centred in the centre point (P), and comprises two straight portions that develop with a certain length (L1, L2; L5, L6) from the centre point up to a border of the wind blade, optionally comprising two further straight contours with a certain length (L3, L4).

A further aspect of the present disclosure relates to a method for forming a building assembly comprising: providing three wind blades (1), each wind blade having, a cutting contour (2, 9, 12) for segmenting the wind blade into an inner segment (3) and an outer segment (4), the outer segment (4) comprising an opening (7) on a side opposite to the cutting contour; aligning the cutting contours of the wind blades such that the outer segments (4) of the three wind blades are positioned to fit into the respective inner segments (3) of another wind blade; inserting each outer segment (4) through the opening (7) of the corresponding inner segment (3); arranging the outer segments (4) of the wind blades in the same horizontal plane so that the cutting contours (2, 9, 12) abut one another; and fixing the outer segments (4) in position to form a building assembly, optionally forming a hollow space for accommodating at least one of pipes, cables, ducts, or sunlight.

A further aspect of the present disclosure relates to the use of the building assembly as a building structure for building a warehouse, modular house, residential building, commercial building, industrial facility, agricultural shelter, community centre, or other similar building structures.

**BRIEF DESCRIPTION OF THE DRAWINGS**

The following figures provide preferred embodiments for illustrating the disclosure and should not be seen as limiting the scope of invention.

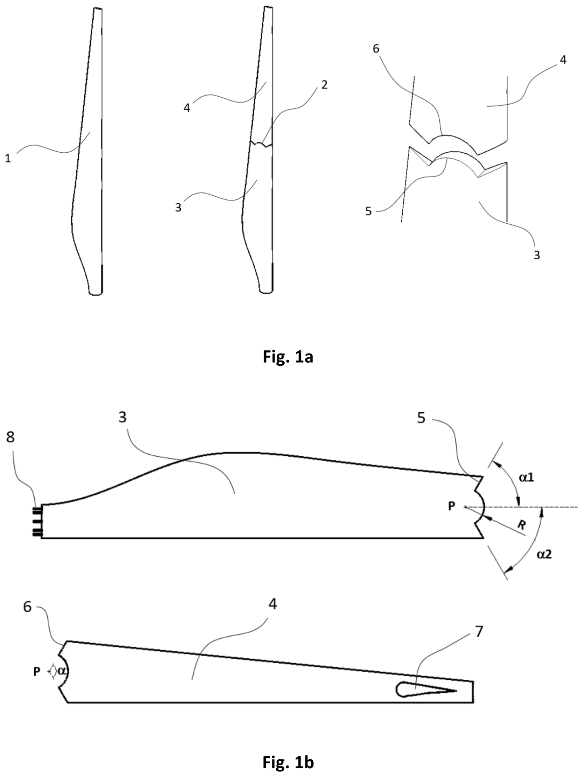

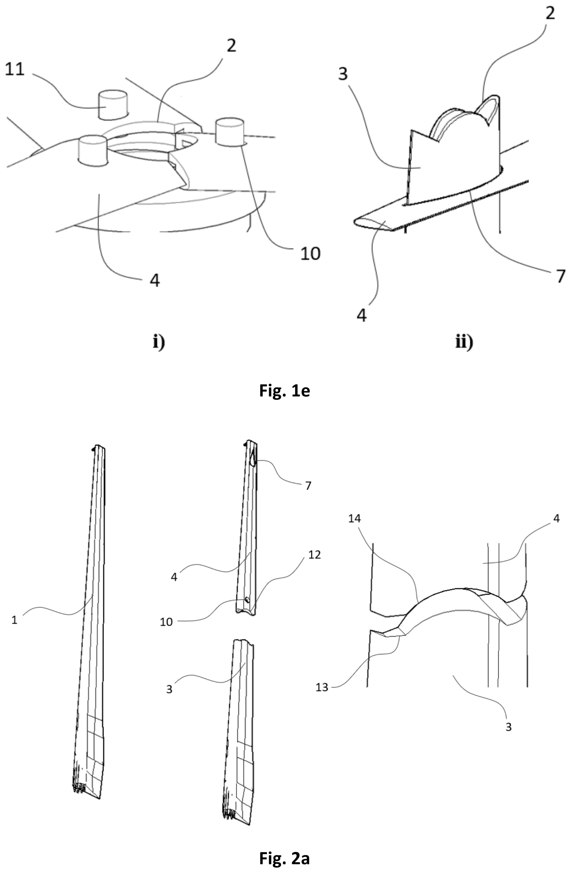

Figure 1a illustrates a generic wind turbine blade in two different stages, the entire blade and the blade itself being split in two by a cutting contour designed to minimize waste during execution. It also depicts a detailed view of the cutting contours. The numbers shown represent:

(1) Wind Blade;
(2) Type I Cutting Contour;
(3) Inner wind blade segment;

(4) Outer wind blade segment;
(5) Type I Cutting Contour of the inner wind blade segment;
(6) Type I Cutting Contour of the outer wind blade segment.

Figure 1b illustrates a 2D representation of two segments resulting from the split of a wind blade. Numbers here represent:

(3) Inner wind blade segment;
(4) Outer wind blade segment;
(5) Type I Cutting Contour of the inner wind blade segment;
(6) Type I Cutting Contour of the outer wind blade segment;
(7) Opening for the fitting of the inner wind blade segment;
(8) Plug bolts;
($\alpha_1$) Left angle between the longitudinal axis of the blade and the straight contour of the cut;
($\alpha_2$) Right angle between the longitudinal axis of the blade and the straight contour of the cut;
($\alpha$) Opening angle of the straight cutting contours;
(R) Circular cutting contour radius;
(P) Geometric centre of the cutting contour.

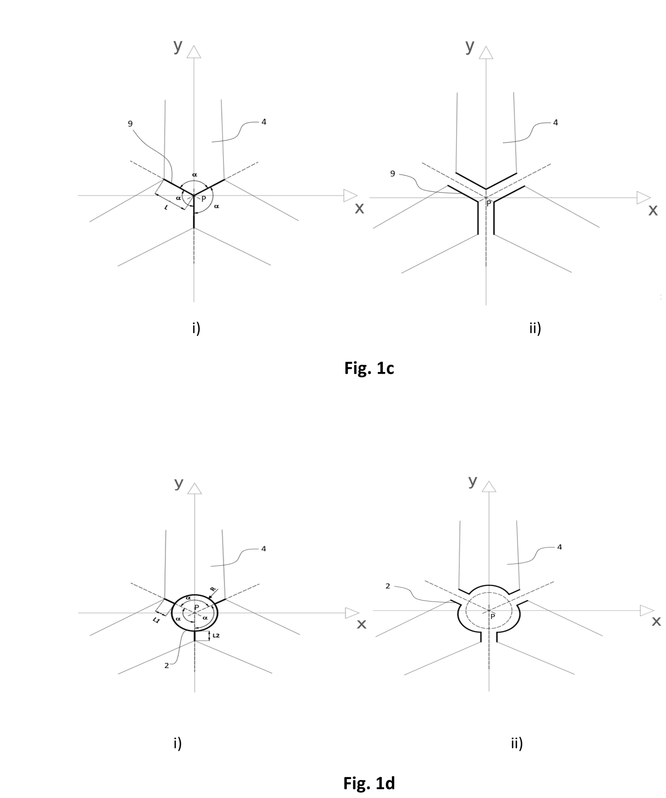

Figure 1c illustrates a 2D representation of the concentric fitting of three outer wind blade segments and the produced cuts for that purpose. Situation i) shows the outer wind blade segments set together, while situation ii) shows them with a slight displacement.

(4) Outer wind blade segment;
(9) "V" shaped Cutting Contour of the outer wind blade segment;
($\alpha$) Opening angle of the straight cutting contours;
(P) Geometric centre of the cutting contour;
(L) Length of the straight cutting contour.

Figure 1d shows another 2D representation of the concentric fitting of three outer wind blade segments with a different kind of the produced cuts for that purpose. Situation i) shows the outer wind blade segments set together, while situation ii) shows them with a slight displacement.

(2) Type I Cutting Contour;
(4) Outer wind blade segment;
($\alpha$) Opening angle of the straight cutting contours;
(R) Circular cutting contour radius;
(P) Geometric centre of the cutting contour;
(L) Length of the straight cutting contour;
(L1) Length of the right straight cutting contour of the type I cutting contour;
(L2) Length of the left straight cutting contour of the type I cutting contour.

Figure 1e illustrates: i) an example of the use of one of the cutting contours disclosed herein in order to set three outer wind blade segments together; ii) an example of how two different segments of the same wind blade can fit in each other. Numbers are related to:

(2) Type I Cutting Contour;
(3) Inner wind blade segment;
(4) Outer wind blade segment;
(7) Opening for the fitting of the inner wind blade segment;
(10) through-hole for outer elements connection;
(11) Generic external plug bolt for outer wing blade segments connection.

Figure 2a illustrates a generic wind turbine blade in two different stages, the entire blade and the blade itself being split in two by a different cutting contour than the cutting contour disclosed in Figure 1a, also designed to minimize waste during execution. It includes a detailed view of the cutting contours. The numbers are in accordance with:

(1) Wind Blade;
(3) Inner wind blade segment;
(4) Outer wind blade segment;
(7) Opening for the fitting of the inner wind blade segment;
(10) through-hole for external elements connection;
(12) Type II cutting contour;
(13) Type II Cutting Contour of the inner wind blade segment;
(14) Type II Cutting Contour of the outer wind blade segment.

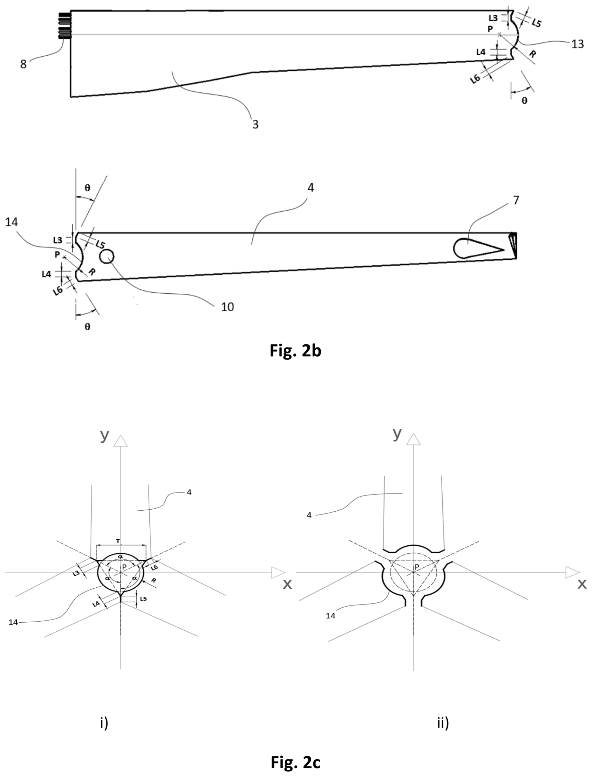

Figure 2b illustrates a 2D representation of two segments resulting from the split of a wind blade with a different cutting contour than the cutting contour shown in Figure 1b. Reference signs are according to:

(3) Inner wind blade segment;
(4) Outer wind blade segment;
(7) Opening for the fitting of the inner wind blade segment;
(8) Plug bolts;
(10) through-hole for external elements connection;
(13) Type II Cutting Contour of the inner wind blade segment;
(14) Type II Cutting Contour of the outer wind

blade segment;
($\Theta$) Angle between the straight cutting contours of the type II cutting contour; perpendicular to the blade axis and the straight cutting contours of the type II cutting contour, oblique to the blade axis;
(R) Circular cutting contour radius;
(P) Geometric centre of the cutting contour;
(L3) Length of the right straight cutting contour of the type II cutting contour, perpendicular to the blade axis;
(L4) Length of the left straight cutting contour of the type II cutting contour, perpendicular to the blade axis;
(L5) Length of the right straight cutting contour of the type II cutting contour, oblique to the blade axis;
(L6) Length of the left straight cutting contour of the type II cutting contour, oblique to the blade axis.

Figure 2c presents a 2D representation of the concentric arrangement of three outer wind blade segments, featuring a different type of cut. Situation i) shows the outer wind blade segments set together, while situation ii) shows them with a slight displacement. Numbers correspond to:

(4) Outer wind blade segment;
(14) Type II Cutting Contour of the outer wind blade segment;
($\alpha$) Opening angle of the straight cutting contours;
(R) Circular cutting contour radius;
(P) Geometric centre of the cutting contour;
(L3) Length of the right straight cutting contour of the type II cutting contour, perpendicular to the blade axis;
(L4) Length of the left straight cutting contour of the type II cutting contour, perpendicular to the blade axis;
(L5) Length of the right straight cutting contour of the type II cutting contour, oblique to the blade axis;
(L6) Length of the left straight cutting contour of the type II cutting contour, oblique to the blade axis;
(T) Side of the equilateral triangle inscribed in the contours of the cut.

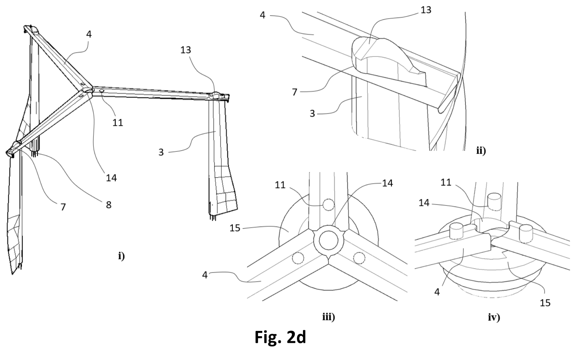

Figure 2d shows; i) a possible generic structure built by connecting the segments resulting from the cutting of three wind turbine blades; ii) a detail of a possible connection between an outer segment and an inner segment of a wind blade; iii) a top-view of a possible three outer segments joint connected to a generic structure; iv) a 3D perspective of a possible three outer segments joint connected to a generic structure. Numbers mean:

(3) Inner wind blade segment;
(4) Outer wind blade segment;
(7) Opening for the fitting of the inner wind blade segment;
(8) Plug bolt
(11) Generic external plug bolt for outer wing blade segments connection;
(13) Type II Cutting Contour of the inner wind blade segment;
(14) Type II Cutting Contour of the outer wind blade segment;
(15) Base structure.

## DETAILED DESCRIPTION

The present disclosure relates to a wind blade segmented by at least one cutting contour into an inner segment and an outer segment. The cutting contour comprises straight and circular portions configured to enable modular assembly of blade segments. The outer segment includes an opening configured to receive an inner segment of another wind blade. A building assembly is formed using a plurality of wind blades, wherein the outer segments are arranged in a horizontal plane and abut one another, optionally defining a hollow space configured to accommodate utility installations. The disclosure further relates to a method for manufacturing wind blades having predetermined cutting contours and for assembling the segmented blades into modular structural assemblies suitable for use in building constructions.

With reference to the figures, some embodiments are now described in a more detailed manner, as well as other aspects and advantages of the described cutting contours for wind turbine blades. The referred figures do not, however, intend to limit the scope of the present application, being only destined to be analysed together with the text descriptions.

One of the embodiments of the present technology can be seen in Figure 1a. This illustration shows an entire wind blade (1) that can be divided in two in order to take portion in any structure, such as a building structure. These segmentation can be done through a cutting contour specially conceived taking into account the reducing of the waste originated by the cut itself. Type I Cutting Contour (2) is in line with this zero-waste way of thinking and it allows to divide any wind blade in two separate resulting portions, named inner wind blade segment (3) and outer wind blade segment (4) herein. Also visible in the right side of Figure 1a, is a close view of the type I Cutting Contour (2), which generates the Type I Cutting Contour of the inner wind blade segment (5) in one of the inner wind blade segment (5) ends and the Type I Cutting Contour of the outer wind blade segment (6) in one of the outer wind blade segment (4) ends.

Figure 1b shows an embodiment of the technology that is pretty similar to the embodiment disclosed in Figure 1a. Figure 1b shows a two dimensions representation of the two resulting segments of a wind blade after the proposed cut. In said figure, it is visible an inner segment of the wind blade (3) fitted with a set of plug bolts (8) in its root and with the type I cutting contour of the inner wind blade (5). This type I cutting contour of the inner wind blade (5) can be geometrically described in two dimensions by its geometric centre of the cutting contour (P), from where is centred the (R) radius circular contour of the type I cutting contour (2) and from where are generated the angles of the straight lines that make up the cutting contour: the left angle between the longitudinal axis of the blade and the straight contour of the cut ($\alpha_1$) and the right angle between the longitudinal axis of the blade and the straight contour of the cut ($\alpha_2$). The sum of ($\alpha_1$) and ($\alpha_2$) results in the opening angle of the straight cutting contours ($\alpha$).

The described cutting contour can be achieved by the use of mechanical cutting tools or any other cutting means suitable for the shape and materials that usually constitute wind blades. It is also suitable for a range of wind blade geometries regardless of its length, thickness and the width between its contours in any of its sections. Also visible in Figure 1b, is the outer wind blade segment (4) which, in one of its ends, shows the type I cutting contour of the outer wind blade segment (6), that is the negative shape of the type I cutting contour of the inner wind blade segment (5) present in the inner segment of the wind blade (3). The outer wind blade segment (4) shown here is also fitted with an opening (7) for the fitting of the inner wind blade segment, that works as a negative shape of the inner wind blade segment (3) cross section close to one of its ends and, as so, that allows the fitting of both segments, setting them together to take portion in a structure.

Figure 1c reveals a two-dimension drawing of the abutment of three outer wind blade segments (4). Paying attention to the illustration i) of this Figure, the mentioned three outer wind blade segments (4) are in contact through their "V" shaped Cutting Contour of the outer wind blade segment (9). This is the basic cut contour that allows to set three outer wind blade segments together and that reduces the waste generated during the wind blade cutting process at the same time. For symmetric reasons, and to maximize the length of the contact between each three outer wind blade segments that can be obtained from a single wind turbine, the two straight contours that compound one "V" shaped Cutting Contour of the outer wind blade segment (9) form an angle (a) - opening angle of the straight cutting contours - of 120º preferably, once this angle allows the "V" shaped Cutting Contour of the outer wind blade segment (9) to be exactly the same in both three outer wind blade segments (9), since they are the same model, belonging to the same wind turbine.

The length of the straight cutting contour (L) that starts from the geometric centre of the cutting contour (P) until it reaches the wind blade border depends on the wind blade model and is preferably the same in both two segments that constitute de "V" shaped Cutting Contour (9), even though it can show different lengths in other possible embodiments of the technology. However, by using this type of contour, there is no predicted hollow space in the three outer wind blade segment (9) union, which can be disadvantageous if those three segments are intended to take portion in a given structure and if it is needed to pass something (e.g. pipes, cables, ducts, sunlight, etc.) through that same union. Illustration ii) of the same Figure shows the same set of outer wind blade segments (4) revealed in Illustration i), but slightly displaced this time.

Figure 1d illustrates another embodiment of the technology with a two-dimension representation of the abutment of three outer wind blade segments (4). This is the same embodiment shown in Figure 1b. Like the "V" shaped Cutting Contour (9) shown in Figure 1c, the cutting contour shown in both illustrations i) and ii) of the Figure 1d allow to set the three outer wind blade segments together, while it reduces the waste generated during the cutting operations at the same time. However, contrary to that Figure 1c's "V" shaped Cutting Contour (9), this embodiment refers to a cutting contour designed to enable some hollow space that can be used to allow pipes, cables, ducts, sunlight, among others, to go through. This can be useful in structures such as buildings, where it may be necessary to pass an object or material through the junction of the wind blade segments forming the building structure..

This type I cutting contour (2) can be geometrically described by a circular contour centred in the geometric centre of the cutting contours (P), with a certain radius, and by two straight lines that go from the geometric centre of the cutting contours (P) to each border of the wind blade. The inner space formed between the circular contour and the two straight lines, both centred in the geometric centre of the cutting contours (P), is empty. So, the type I cutting contour can be described by a circular contour that can have variable perimeter and variable circular cutting contour radius (R), according to the hollow space needs and by two straight contours. The length of the right straight cutting contour of the type I cutting contour (L1) and the length of the left straight cutting contour of the type I cutting contour (L2) are variable, depending on the model of the used wind blade and are preferably of the same length, although this length can be different too, what is also dependent on the wind blade model. Notice that this Type I cutting counter (2) is thought to minimize waste generated during the wind blade cutting process, being aligned with reduced cutting waste.

The combined use of both the outer wind blade segment (4) and the inner wind blade segment (3), both derived from a wind blade previously portion of an end-of-life wind turbine, aligns with principles of sustainability, the circular economy, and zero-waste policies. As illustrated in Figures 1a, 1b, and 1d, these segments feature symmetrical cutting contours, resulting in minimal waste generation during the cutting process.

Figure 1e illustrates two possible situations for the use of reused end-of-life wind turbine blades. Situation i) shows the union of three outer wind blade segments (4) on the top of a structure wherein type I cutting contours (2) are applied to each of the segments. To secure each blade to the top of a structure, it can be necessary to resort to screws, plug bolts or any other mean to ensure the connection of the entire set. The present example shows each of the outer wind blade segments (4) connected by one generic external plug bolt for outer wing blade segments connection (11), that goes through the outer wind blade segment (4) by fitting in a through-hole for outer elements connection (10). Noticeable Figure 1e i) depicts the centre of the set of the three outer wind blade segments (4) with a hollow space, due to the use of the type I cutting contour (2) to divide each of the wind blades. As already explained, this hollow space allows pipes, ducts, sunlight, elevators, etc. to pass through the union of the set of the outer wind blade segments (4). But by using the type I cutting contour (2) it is not only the outer segments of the wind blade (4) that can be used. Also, the inner wind blade segments (3) are ready for use and that can be observed by the connection between these two wind blade segments ((3) and (4)) illustrated in situation ii) of the Figure 1e. Here it can be seen the connection between one outer wind blade segment (4) and one inner wind blade segment (3).

In this example, the inner wind blade segment (3) passes through the outer wind blade segment (3) through an opening for the fitting of the inner wind blade segment (7), that is a cutting contour slightly larger than the section of the inner wind blade segment (3) to which the outer wind blade segment (4) connects. Between the contour of this opening and the surface of the inner wind blade segment (3), an elastic material can be applied to enhance the joint or a material with negative contraction properties, such as cork, may be used. The opening for the fitting of the inner wind blade segment (7) can assume even larger contours in the shape of an air foil cross-section, which allows the outer wind blade segment (4) to fit in a wide range of inner wind blade segments (3) of other models, giving modularity to the solution.

In ii) of Figure 1e, type I cutting contour (2) is in evidence, given that it is shown in one of the ends of the inner wind blade segment (3). Comparing the cut ends of both inner wind blade segment (3) and outer wind blade segment (4) visible in both i) and ii) situations, it is noticeable that the zero-waste principles driven by the design of this type I cutting contour (1), since the resulting segments of the wind blade can take portion in a structure at the same time with minor waste generated.

Another one of the embodiments of the present technology is illustrated by Figure 2a. Just like in Figure 1a, it can be seen an entire wind blade (1) that can be divided in two in order to take portion in any structure which can use wind blades in its purpose. The division can be done by another embodiment of the present technology that is another cutting contour specially conceived regarding zero waste during cutting operations. Type II Cutting Contour (12) is in line with this zero-waste philosophy, allowing to divide any wind blade in two separate resulting portions, named inner wind blade segment (3) and outer wind blade segment (4) herein. Also visible in the middle representation of the divided wind blade is the opening for the fitting of the inner wind blade segment (7) and the generic through-hole for outer elements connection (10), whose purposes are, respectively, to allow inter-connection between the inner wind blade segment (3) and outer wind blade segment (4) and to allow the connection to an external structure by means of a plug bolt, for example. In the right side of Figure 2a, it is disclosed a detail of the type II Cutting Contour (12), which generates the Type II Cutting Contour of the inner wind blade segment (13) in one of the inner wind blade segments (5) ends and the Type II Cutting Contour of the outer wind blade segment (14) in one of the outer wind blade segment (4) ends.

Figure 2b reveals the same embodiment of the technology disclosed in Figure 2a. Figure 2b shoes a two-dimensional representation of the two resulting segments of a wind blade after being divided by a type II cutting contour (12). It is visible an inner segment of the wind blade (3) fitted with a set of plug bolts (8) in its root and with the type II cutting contour of the inner wind blade (13) in one of the ends. This type II cutting contour of the inner wind blade (13) can be geometrically described in two dimensions by its geometric centre of the cutting contour (P), from where is centred the circular contour of the type II cutting contour (12), with a radius (R), and from where are generated the angles of two of the four straight contours that make up the cutting contour.

The inclined straight contours preferably show the same length, although due to different models of wind blades and to the lack of symmetry of some of them, the length of the right straight cutting contour of the type II cutting contour, oblique to the blade axis (L5) can be different of the length of the left straight cutting contour of the type II cutting contour, oblique to the blade axis (L6). The type II cutting contour (12) includes other two straight contours perpendicular to the blade longitudinal axis. They are parallel to the transversal axis where the geometric centre of the cutting contour (P) is, being the distance between this axis and the straight contours variable, depending once again of the wind blade model and of the desired shape for the hollow space formed in the union of the three outer wind blade segments (4).

The length of the right straight cutting contour of the type II cutting contour, perpendicular to the blade axis (L3) is preferably the same as the length of the left straight cutting contour of the type II cutting contour, perpendicular to the blade axis (L4), even though they can also be different. Both oblique straight contours form an angle between the alignment of the straight cutting contours perpendicular to the blade axis and the line in which they are contained. The angle between the straight cutting contours of the type II cutting contour, perpendicular to the blade axis and the straight cutting contours of the type II cutting contour, oblique to the blade axis (Θ) is preferably of 30º, although it can assume different values.

The described cutting contour can be achieved by the use of a mechanical cutting tool or any other cutting means suitable for the shape and materials that usually constitute wind blades. It is also suitable for a range of wind blade geometries regardless of its length, thickness and the width between its contours in any of its sections. Also visible in Figure 2b, is the outer wind blade segment (4) that, in one of its ends, exhibit the type II cutting contour of the outer wind blade segment (14), that is the negative shape of the type II cutting contour of the inner wind blade segment (13) existing in the inner segment of the wind blade (3). Just like it happens in the embodiment of the technology shown in Figure 1b, the outer wind blade segment (4) shown here is also fitted with an opening for the fitting of the inner wind blade segment (7), that acts as a negative shape of the inner wind blade segment (3) cross section close to one of its ends and, as such, that allows the fitting of both segments, setting them together to take portion in a structure. A through-hole for external elements connection (10) can also feature in the outer wind blade segment, since it can be necessary to connect to an external structure.

Figure 2c illustrates a two-dimensional representation of the abutment of three outer wind blade segments (4) obtained by using the same three outer wind blade segments (4) represented in Figure 2b. The cutting contour shown in both illustrations i) and ii) of the Figure 2c allow to set the three outer wind blade segments together, while it reduces the waste generated during the cutting operations at the same time. In a similar way to the embodiment shown in Figure 1d, this embodiment refers to a cutting contour designed to allow hollow space in the union of the wind blade segments, hollow space that can be used to pass pipes, cables, ducts, sunlight, among others, through the three outer wind blade segments union.

This type II cutting contour (14) can be geometrically described by a circular contour centred in the geometric centre of the cutting contours (P), with a certain radius, and by four straight lines. Two of the straight lines go from the geometric centre of the cutting contours (P) to each border of the wind blade, while the other two straight lines are parallel to the transversal axis (transversal to the wind blade longitudinal axis) where the geometric centre of the cutting contour (P) is, at a certain distance of that transversal axis. The inner space formed between the circular contour and the two straight lines, both centred in the geometric centre of the cutting contours (P), is empty.

Therefore, the type II cutting contour can be described by a circular contour that can have variable perimeter and variable circular cutting contour radius (R), according to the hollow space needs and by two straight contours and by three small empty triangles resulting from the pairing of each outer wind blade segments (4) fitted with straight cutting contours perpendicular to the blade axis. The length of the right straight cutting contour of the type II cutting contour, perpendicular to the blade axis (L3), the length of the left straight cutting contour of the type II cutting contour, perpendicular to the blade axis (L4), the length of the right straight cutting contour of the type II cutting contour, oblique to the blade axis (L5) and the length of the right straight cutting contour of the type II cutting contour, oblique to the blade axis (L6) are variable, depending on the model of the used wind blade and are preferably of the same length, although this length can be different too.

The resulting hollow space, by its turn, can be defined by a circle with a certain radius (R), centred in the geometric centre of the cutting contour (P), and preferably by an equilateral triangle centred in the same (P) point with a side of the equilateral triangle inscribed in the contours of the cut (T). Notice that the presented Type II cutting counter (12) is thought to minimize waste generated during the wind blade cutting process, being aligned with sustainable procedures.

The combination of the use of both outer wind blade segments (4) and inner wind blade segments (3) (both coming from a wind blade that once belonged to an end-of-life wind turbine), that, according to Figures 1a, 1b and 1d have symmetric cutting contours, is in line with sustainability, circular economy and zero waste policies, given the fact that the waste generated during the cutting process is limited to a minimum.

Additionally, the type II cutting contour (12) shows some advantages if compared to the type I cutting contour (2), namely the need for less width range of the cutting system that produces the cutting contour and the lower divert angle produced by the change of direction of the cutting contour between the circular contour and the straight contours, since in this case the angle between the straight contours and the tangent to the circular contour close to the intersection of both contours is lower, which can turn the cutting process easier.

Figure 2d illustrates a possible situation for the use of reused end-of-life wind turbine blades for forming a building assembly. Situation i) depicts the placement of wind blade segments to form a tri-supported structure where the inner wind blade segments (3) act like columns and are inter-connected to the outer wind blade segments (4), acting like beams, which, by their turn, abut together at the centre of the structure. The inter-connection of the outer and inner wind blade segments is possible due to the existence of an opening for fitting of inner wind blade segments (7), which can be easily seen in situation ii) that also illustrates the type II cutting contour of the inner wind blade segment (13).

Plug bolts (8) present at the root of each inner wind blade segments (3) are left on purpose so they can be used to easily connect these segments to external foundations or other external supports. Situations iii) and iv) illustrate a possible union of the three outer wind blade segments (4), that are fitted with type II cutting contour of the outer wind blade segment (14). To allow the connection to an external structure, herein represented by the base (15), external plug bolts can be used, like the generic external plug bolts for outer wind blade segments connection. Noticeable in this Figure the centre of the set of the three outer wind blade segments (4) is a hollow space, due to the use of the type II cutting contour (12) to divide each of the wind blades.

In an embodiment, the junction comprises three branches arranged symmetrically with an angular separation $\alpha$ between adjacent branches, wherein $\alpha$ is preferably 120°, corresponding to one third of a full revolution of 360°. This angular configuration enables an automated and repeatable construction process, based on the principle that the central region of the junction assumes an approximately circular shape, thereby providing a stable geometric reference. Nevertheless, the angular separation $\alpha$ is not limited to 120° and may be selected differently in special or non-standard configurations, without departing from the underlying geometric principle.

The transition between each pair of adjacent branches is formed by a circular arc of radius R, said arc being tangential to both branches. This tangency ensures geometric continuity of direction, i.e. first-order continuity ($G^1$ or $C^1$ continuity), thereby avoiding sharp corners and ensuring smooth load transfer, which is a typical requirement in structural interlocking assemblies.

For a circular fillet tangential to two straight branches forming an angle $\alpha$, the setback distance L, measured along each branch from the theoretical intersection point P of the branches to the respective point of tangency with the circular arc, is defined by the geometric relationship:

$$L = R \cdot \tan(\alpha / 2).$$

In the disclosed embodiment, where $\alpha = 120°$, this relationship simplifies to:

$$L = R \cdot \tan(60°) = \sqrt{3} \cdot R,$$

from which it follows that:

$$R = L / \sqrt{3}.$$

This relationship establishes a direct and scalable proportionality between the arc radius R, the setback length L, and the angular separation $\alpha$, allowing consistent dimensioning of the junction geometry.

At each tangency point T between the circular arc and an adjacent branch, the radius drawn from the centre of the arc to the tangency point is perpendicular to the respective branch, and the tangency point lies on the circumference of the circle defined by radius R. These conditions jointly guarantee tangential continuity and eliminate angular discontinuities at the transition.

For each fillet formed between two adjacent branches at 120°, the centre C of the circular arc lies on the angle bisector of the two branches. In this configuration, the distance from the theoretical intersection point P to the centre C is equal to 2L, meaning that the centre of the arc is positioned at a distance twice the setback length along the bisector of the branch pair.

The central angle subtended by each circular arc connecting two adjacent branches is given by:

$$\theta = \pi - \alpha,$$

which, for $\alpha$ = 120°, results in a central angle of 60° ($\pi/3$ radians). Accordingly, the length of each circular arc is:

$$s = R \cdot \theta = R \cdot (\pi / 3)$$

Since a junction with three branches at 120° comprises three such adjacent pairs, the total length of the curved transitions around the central region is equal to the sum of the three arc lengths, resulting in an overall arc length of:

$$S = \pi \cdot R.$$

When the junction is configured as a three-branch, Y-shaped connection with branches separated by 120°, the same geometric relationships apply identically to each adjacent pair of branches. This results in a coherent and symmetrical geometric system that enables precise dimensioning of the curved transitions around the central point P, with guaranteed tangency, directional continuity, and structural compatibility across all branches.

This geometric definition provides a robust and repeatable basis for designing curved transition regions in modular structural joints, ensuring smooth load paths, reduced stress concentrations, and reliable assembly, while remaining adaptable to alternative angular configurations when required.

In order to properly define the opening intended for structural coupling, the wind turbine blade is required to have a minimum blade width of 500 mm at the location of the cut, thereby ensuring sufficient material to accommodate the functional fitting without compromising structural integrity or aerodynamic performance.

As illustrated in figure 1b, the blade profile comprises an aerodynamic extrados and intrados, a leading edge, and a modified trailing edge region. A reference plane P is defined, together with angles $\alpha_1$ and $\alpha_2$ associated with the cut geometry at the trailing edge. At the distal end of the blade, a recess or fitting is provided, identified as element (7), which is configured for structural coupling with another blade segment or complementary structural element. This feature is not a simple transverse cut, but rather a functional fitting that is geometrically integrated into the aerodynamic profile of the blade.

In the state of the art, wind turbine blades typically employ flat or cylindrical joints and cuts oriented perpendicular to the longitudinal axis of the blade. Such solutions interrupt aerodynamic continuity, generate stress concentrations, induce flow separation, and increase aerodynamic noise and fatigue loading. In contrast, the fitting described herein is defined by precise geometric and aerodynamic criteria that overcome these drawbacks.

The orientation of the cut forming the fitting is not perpendicular to the longitudinal axis of the blade. Instead, the fitting surfaces are defined by inclined faces oriented in accordance with the mean camber line of the aerodynamic profile. This orientation preserves flow continuity, avoids the formation of aerodynamic steps, and maintains the local angle of attack along the profile in the region of the fitting.

Geometrically, the fitting exhibits an elongated shape with a smoothed aerodynamic cross-section and is free of sharp corners or abrupt discontinuities. The transitions between the fitting surfaces and the surrounding blade geometry are provided with fillet radii of at least 2% to 5% of the local chord length, thereby ensuring geometric continuity and significantly reducing stress concentrations in the laminate and internal structure.

The fitting is located in proximity to the trailing edge of the blade but does not completely remove the trailing edge. A residual structural thickness is maintained to ensure mechanical strength. Preferably, the fitting is positioned between 70% and 95% of the chord length measured from the leading edge, which represents a balanced compromise between aerodynamic sensitivity and structural robustness.

From an aerodynamic standpoint, the fitting is defined by two inclined faces forming an included angle $\alpha$, wherein the individual face angles $\alpha$, and $\alpha_2$ are selected such that their sum corresponds to the included angle. In a preferred embodiment, the included angle $\alpha$ is approximately 120°, with $\alpha$, and $\alpha_2$ being substantially symmetrical. Admissible manufacturing and assembly variations of $\pm 5°$ are tolerated without significant degradation of aerodynamic performance. In special cases, such as structural irregularities or defects in the central intersection structure, larger deviations may be accommodated.

This angular configuration ensures the absence of premature flow separation, mitigates the formation of intense vortices in the region of the fitting, and provides aerodynamic stability even at low Reynolds numbers. The fitting is further configured so as not to significantly displace the aerodynamic centre or centre of pressure of the blade. Quantitatively, the admissible displacement of the aerodynamic centre is less than $\pm 5%$ of the local chord, thereby maintaining the aerodynamic moment within the limits of the original blade profile.

The inclined and smoothed geometry of the fitting also contributes to noise reduction by limiting vortex shedding and minimizing tonal noise typically associated with orthogonal cuts at the trailing edge. This results in reduced vibrational excitation and improved structural durability over the service life of the assembly.

From a structural and assembly perspective, the fitting creates a zone of progressive load transmission rather than abrupt stress transfer. This leads to improved fatigue behaviour and a reduced risk of cracking in both the composite laminate and the internal structural elements. The geometry of the fitting allows for sliding or overlapping engagement with a complementary structure, enabling automatic alignment of the blade axis during assembly. Loads are transmitted over an extended contact area rather than being concentrated at a single point.

Manufacturing and assembly tolerances are defined to ensure reliable coupling, with dimensional tolerances of the fitting in the range of $\pm0.5$ mm to $\pm1.0$ mm, angular tolerances of the inclined faces of approximately $\pm0.5°$, and a recommended maximum surface roughness of Ra $\leq 3.2$ $\mu$m for the contact surfaces.

Accordingly, the blade comprises, at its distal end, a functional fitting obtained by a geometrically oriented cut relative to the mean camber line of the aerodynamic profile, said fitting being defined by two inclined faces forming an included angle of approximately 120°. The fitting surfaces are provided with sufficient fillet radii to ensure geometric continuity, reduce stress concentrations, and maintain attached flow along both the extrados and intrados of the blade. This fitting enables the blade to be coupled to a complementary structure without degradation of aerodynamic performance or structural strength, thereby constituting an innovative solution over the prior art.

In order to ensure reliable structural coupling and to prevent unintended sliding of an inner blade segment relative to the fitting, the terminal fitting (7) is dimensioned and configured with defined clearances, tolerances, material interfaces, and mechanical retention features.

In an embodiment, the fitting (7) is configured as an insertion-type male-female coupling, wherein the dimensional clearances are selected to allow assembly without impact loading while avoiding excessive looseness. Preferably, the lateral clearance on each side is from 0.10 mm to 0.30 mm, resulting in a total lateral clearance of approximately 0.20 mm to 0.60 mm. The clearance in thickness or height direction is preferably from 0.10 mm to 0.25 mm. Optionally, the fitting may include a slight assembly conicity, preferably from 0.2° to 0.8°, to promote self-centring and progressive engagement during insertion. These values are selected such that the deformable interface material generates a controlled preloading force once assembled.

Manufacturing and assembly tolerances are defined to ensure functional compatibility between blade segments while remaining compatible with industrial fabrication processes. In particular, the dimensional tolerance of the fitting (7) is preferably from $\pm0.20$ mm to $\pm0.50$ mm depending on the manufacturing method employed, while the angular tolerance of the inclined fitting faces is preferably $\pm0.5°$. An admissible axial misalignment of the blade segments is preferably limited to 1.0 mm per metre of inserted length. The target surface roughness of the contact faces is preferably in the range of Ra 1.6 $\mu$m to 6.3 $\mu$m, since excessively smooth surfaces reduce frictional resistance, whereas excessively rough surfaces increase wear, fatigue risk and assembly difficulty.

The fitting is dimensioned to withstand the worst-case mechanical scenario, namely vertical assembly of a full-scale blade segment under its own weight combined with dynamic loads due to vibration and gusts. In this condition, non-sliding is ensured by the combined action of frictional retention and redundant mechanical locking. The physical condition for non-sliding is that the available frictional and/or mechanical retention force exceeds the gravitational and dynamic loads acting on the inner blade segment.

The frictional retention force is generated by the normal contact pressure between the fitting surfaces and a deformable, high-friction interface layer. The frictional condition may be expressed as the product of the friction coefficient $\mu$, the normal force N, and a dynamic safety factor, which is preferably selected from 2.0 to 3.0 to account for gusts and vibration. For typical wind turbine blade segments with a mass on the order of several tonnes, and using an interface material with an effective friction coefficient of at least 0.6, the required contact pressure can be achieved with a practical insertion length of approximately 1.0 m.

For an insertion length of approximately 1.0 m and a useful contact height of approximately 0.35 m, assuming two main load-bearing faces in compression, the resulting contact area allows average contact pressures on the order of 0.05 MPa to 0.30 MPa. Although values toward the upper end of this range are relatively high, they are feasible when the contact pressure is well distributed, an appropriate deformable interface layer is used, and a redundant mechanical retention element is provided. The assembly is therefore conceived such that friction is assisted by geometry and mechanical locking rather than relied upon as the sole retention mechanism.

To generate the required normal force, the fitting preferably incorporates a controlled combination of dimensional clearance and elastic interference. Prior to application of the interface layer, the fitting may exhibit a total lateral clearance of approximately 0.6 mm to 1.2 mm and a total thickness clearance of approximately 0.3 mm to 0.8 mm, with dimensional tolerances preferably in the range of $\pm0.3$ mm to $\pm0.7$ mm and angular tolerances of $\pm0.5°$. The interface layer, acting as a liner, preferably has a thickness from 4 mm to 8 mm and operates under a service compression of approximately 10% to 25%, resulting in an effective interference of approximately 0.8 mm to 2.0 mm. This approach allows the liner to absorb dimensional tolerances and generate contact pressure without requiring impractically tight manufacturing tolerances.

To avoid dependence solely on friction, the fitting preferably includes at least one redundant axial retention element configured to prevent extraction under gravity or dynamic loading. In one embodiment, the retention element comprises one or more transverse pins operating in double shear. A particularly robust solution includes either a single pin with a diameter of approximately 35 mm to 40 mm or two pins with diameters of approximately 25 mm to 30 mm, providing redundancy and reducing stress concentration. When two pins are used, they are preferably positioned at approximately one-third and two-thirds of the insertion length, with a minimum edge distance of at least four to five times the pin diameter to avoid local laminate damage.

In alternative embodiments, axial retention may be achieved by an internal stop or shoulder cooperating with a retention screw, latch, tongue, bayonet feature, clip, or similar locking element. Such solutions are particularly advantageous for composite structures, as they reduce or eliminate the need for large transverse holes through load-bearing laminates.

All internal corners of the fitting are preferably provided with minimum radii to avoid stress concentrations and fatigue initiation. In particular, internal corner radii are preferably not less than 10 mm and more preferably from 15 mm to 25 mm. The entrance region of the fitting may further include chamfers of approximately 2 mm to 5 mm and lead-in radii of approximately 5 mm to 12 mm to facilitate insertion and protect the interface layer.

The surface finish of the contact faces is selected to provide controlled friction with low wear. Preferably, the surface roughness lies from Ra 3.2 $\mu$m to 6.3 $\mu$m, and mirror-polished surfaces are avoided. Where necessary, a controlled anti-slip microtexture may be applied.

The interface layer arranged between the fitting surfaces is preferably formed from a material having high friction, elastic recovery, and damping properties. Cork represents a particularly advantageous example due to its high friction coefficient, elastic recovery, vibration damping capability, and ability to accommodate micro-irregularities. However, the interface layer may alternatively be formed from elastomeric, viscoelastic or expansible materials such as polyurethane, thermoplastic polyurethane, EPDM, NBR, TPE, closed-cell elastomeric foams, polymeric anti-slip composites, or materials exhibiting controlled expansion due to hygroscopic or thermally induced effects. Materials exhibiting auxetic behaviour, i.e. a negative Poisson ratio leading to increased contact pressure under load or vibration, may also be used as particularly advantageous interface layers. Preferably, the interface layer exhibits an effective dry friction coefficient of at least 0.6, an elastic recovery after compression of at least 70%, and thermal stability over a range of at least -20°C to +60°C, together with resistance to humidity and ultraviolet exposure where applicable.

In an embodiment, the terminal fitting (7) has an insertion length of approximately 1.0 m and a useful contact section of approximately 1.0 m by 0.4 m. The fitting includes internal radii not less than 10 mm, preferably from 15 mm to 25 mm, and may incorporate a conicity from 0.2° to 0.8° per face to achieve self-centring and progressive increase of contact pressure during insertion. The fitting further comprises a deformable, high-friction interface layer having a thickness of approximately 4 mm and operating under a compression of approximately 10% to 25%, thereby generating an average contact pressure of at least 0.08 MPa.

To prevent axial displacement in the direction of gravity during vertical assembly, the system further includes at least one redundant mechanical retention element, preferably comprising two transverse pins spaced along the insertion length, or alternatively an internal stop with a retention screw, latch, pin, clip or bayonet-type locking element.

Since the fitting (7) primarily operates under combined shear and compressive contact loading, the design is verified against conservative admissible stress criteria. In particular, the admissible bearing stress is preferably limited to approximately one quarter of the yield strength of the structural material, for example approximately 50-60 MPa for aluminium or stainless steel alloys, and in accordance with the laminate properties for composite materials. The admissible shear stress may be conservatively limited to approximately 15% of the yield strength of the structural material.

Accordingly, the fitting (7) is configured such that frictional retention, elastic preload, geometric self-locking and redundant mechanical retention act cumulatively to ensure that the inner blade segment remains securely engaged without sliding, even under worst-case static, dynamic and environmental loading conditions.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

**Claims**

1. A wind turbine blade (1) comprising a cutting contour (2, 9, 12) configured to segment the wind turbine blade into an inner segment (3) and an outer segment (4)

wherein the cutting contour (2, 9, 12) comprises:

at least two straight contour portions extending from a common centre point (P) towards a border of the blade at a defined angular separation (α), and

a curved contour portion connecting the straight contour portions, the curved contour portion being tangential to the straight contour portions, such that three outer blade segments obtained from three identical blades are configured to about one another in a common plane at said cutting contours.

2. The wind turbine blade according to claim 1, wherein the angular separation (α) between the straight contour portions is ranging from 105° to 135°, such that three identical outer blade segments form a symmetrical junction.

3. The wind blade according to any of the previous claims, wherein the cutting contour comprises two straight portions that develop with a certain length (L; L1, L2; L5, L6) along a direction from a centre point of the contour (P) up to a border of the wind blade.

4. The wind blade according to any of the previous claims, wherein the cutting contour comprises a circular portion with a radius (R) centred in the centre point (P).

5. The wind blade according to the previous claim, wherein the cutting contour comprises two further straight contours with a certain length (L3, L4), wherein said further two straight contours are parallel to a perpendicular to a wind blade longitudinal axis.

6. The wind blade according to any of the previous claims, wherein the outer segment of the wind blade (4) comprises an opening (7) on an opposite side to the cutting counter, in particular, wherein the opening is larger than the section of the inner wind blade segment for fitting the inner segment of the wind blade.

7. A building assembly for forming a building structure comprising three wind blades according to any of the previous claims.

8. The building assembly for forming a building structure according to the previous claim, comprising three wind blades according to any of the claims 1 to 5, arranging the outer segments in a common plane such that the cutting contours abut; and fixing the outer segments to form a three-branch structural junction .

9. The building assembly for forming a building structure according to the previous claim, comprising three wind blades according to claim 3, wherein the outer segments of the three wind blades form a circular hollow space in a central position.

10. The building assembly for forming a building structure according to claim 7, when dependent on claim 4, wherein the outer segments of the three wind blades form a hollow space with a shape of a circle and a triangle that have the same geometric centre.

11. The building assembly according to claim 8 or claim 9, wherein the hollow space is configured to accommodate at least one of pipes, cables, ducts, or sunlight for use in the building structure.

12. A method for manufacturing a wind blade (1) comprising a step of applying a cutting contour (2, 9, 12) for segmenting the wind blade into at least

an inner segment (3); and
an outer segment (4).

13. The method for manufacturing a wind blade according to the previous claim wherein the cutting contour comprises two straight portions that develop with a certain length (L) along a direction from a centre point the contour up to a border of the wind blade.

14. The method for manufacturing a wind blade according to claim 12 wherein the cutting contour comprises a circular portion with a radius (R) centred in the centre point (P), and comprises two straight portions that develop with a certain length (L1, L2; L5, L6) from the centre point up to a border of the wind blade, optionally comprising two further straight contours with a certain length (L3, L4).

15. A method for forming a building assembly comprising:

providing three wind blades (1), each wind blade having, a cutting contour (2, 9, 12) for segmenting the wind blade into an inner segment (3) and an outer segment (4), the outer segment (4) comprising an opening (7) on a side opposite to the cutting contour;

aligning the cutting contours of the wind blades such that the outer segments (4) of the three wind blades are positioned to fit into the respective inner segments (3) of another wind blade;

inserting each outer segment (4) through the opening (7) of the corresponding inner segment (3);

arranging the outer segments (4) of the wind blades in the same horizontal plane so that the cutting contours (2, 9, 12) abut one another; and fixing the outer segments (4) in position to form a building assembly, optionally forming a hollow space for accommodating at least one of pipes, cables, ducts, or sunlight.

**Fig. 1a**

**Fig. 1b**

i)                              ii)

**Fig. 1c**

i)                              ii)

**Fig. 1d**

**Fig. 1e**

**Fig. 2a**

**Fig. 2b**

i)

ii)

**Fig. 2c**

**Fig. 2d**

| | Europäisches Patentamt European Patent Office Office européen des brevets | **EUROPEAN SEARCH REPORT** | **Application Number** EP 25 22 7695 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/287647 A1 (RORRER RONALD A L [US]) 14 September 2023 (2023-09-14) | 12,13 | INV. F03D1/06 F03D80/80 |
| A | * abstract; figures 7, 8 * <br> * paragraph [0007] * <br> * paragraph [0057] - paragraph [0058] * <br> * paragraph [0070] - paragraph [0072] * <br> ----- | 1-11,14, 15 | |
| X | DE 10 2021 120413 A1 (ADAMCIO ANDRZEJ PRZED WIELOBRANZOWE ANMET [PL] ET AL.) 3 March 2022 (2022-03-03) | 12,13 | |
| A | * abstract * <br> * paragraph [0012] * <br> * paragraph [0040] - paragraph [0041]; figures 1-4,9 * <br> ----- | 1-11,14, 15 | |
| X | Anonymous: "Wikado Playground: Kids playground built from discarded wind turbine parts", Medea, 12 November 2017 (2017-11-12), XP055904411, Retrieved from the Internet: URL:https://lifeandsoulmagazine.com/2017/11/12/wikado-playground-kids-playground-built-from-discarded-wind-turbine-parts [retrieved on 2022-03-23] | 12,13 | |
| A | * the whole document * <br> ----- | 1-11,14, 15 | |

**TECHNICAL FIELDS SEARCHED (IPC)**

F03D

The present search report has been drawn up for all claims

| Place of search | Date of completion of the search | Examiner |
|---|---|---|
| The Hague | 12 May 2026 | Westermayer, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 22 7695

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2026

| Patent document cited in search report | Publication date | Patent family member(s) | Publication date |
|---|---|---|---|
| US 2023287647 A1 | 14-09-2023 | US 2023287647 A1<br>WO 2022026951 A1 | 14-09-2023<br>03-02-2022 |
| DE 102021120413 A1 | 03-03-2022 | DE 102021120413 A1<br>PL 246458 B1<br>US 2022065221 A1 | 03-03-2022<br>03-02-2025<br>03-03-2022 |

EPO FORM P0459

For more details about this annex : see Official Journal of the European Patent Office, No. 12/82